## Europäisches Patentamt

## European Patent Office

## Office européen des brevets

(19)

(11) Veröffentlichungsnummer : **0 130 491**
**B1**

(12)

# EUROPÄISCHE PATENTSCHRIFT

(45) Veröffentlichungstag der Patentschrift :
30.12.86

(51) Int. Cl.⁴ : **B 65 G 51/32**

(21) Anmeldenummer : **84107140.0**

(22) Anmeldetag : **21.06.84**

(54) **Rohrpoststation.**

(30) Priorität : **24.06.83 DE 3322778**
**17.08.83 DE 3329635**

(43) Veröffentlichungstag der Anmeldung :
**09.01.85 Patentblatt 85/02**

(45) Bekanntmachung des Hinweises auf die Patenterteilung : **30.12.86 Patentblatt 86/52**

(84) Benannte Vertragsstaaten :
**AT BE CH FR GB IT LI NL SE**

(56) Entgegenhaltungen :
**DE-A- 3 009 345**
**DE-A- 3 040 979**
**GB-A- 322 374**

(73) Patentinhaber : **Lang + Schiller GmbH**
**Wilhelmstrasse 2**
**D-7314 Wernau (DE)**
**BE CH FR GB IT LI NL SE**
**Ing. Walter Sumetzberger**
**Leberstrasse 108**
**A-1110 Wien (AT)**
**AT**

(72) Erfinder : **Lang, Hartmut**
**Wilhelmstrasse 2**
**D-7314 Wernau (DE)**
Erfinder : **Sauer, Karl-Heinz**
**Georg-Büchner-Weg 20**
**D-6050 Offenbach (DE)**

(74) Vertreter : **Patentanwälte Kohler - Schwindling -**
**Späth**
**Hohentwielstrasse 41**
**D-7000 Stuttgart 1 (DE)**

## Beschreibung

Die Erfindung geht aus von einer Rohrpoststation mit einer Mehrzahl Anschlüsse zum Zufahren und Abfahren von Rohrpostbüchsen, mit einem Rahmen und einem in der Rahmenebene drehbaren Rotor, den zum wahlweisen Verbinden der in der Rahmenebene verlaufenden Anschlüsse ein Kanal mit bogenförmigem Verlauf durchsetzt, dessen Mittellinie in einem Abstand an der Drehachse des Rotors vorbeiläuft, wobei die Anschlüsse durch vom Rahmen gehaltene Stutzen, deren Mittelsenkrechten schiefwinklig zueinander verlaufen, zum Anschluß von bogenförmigen Fahrrohren gebildet werden, derart, daß in einer Verbindungsstellung des Rotors die Mittellinie des Kanales stetig in die Mittelsenkrechte der miteinander verbundenen Stutzen und die Mittellinien der bogenförmigen Fahrrohre übergeht.

Eine derartige Rohrpoststation, nämlich eine Rohrverbindungsweiche, ist aus der DE-A1-30 40 979 bekannt.

Rohrpostanlagen werden dazu verwendet, um innerhalb eines Gebäudes oder eines Gebäudekomplexes kleinere Sendungen über Rohrleitungen zu befördern, beispielsweise Dokumente und Kleinteile in Industriebetrieben, Bargeld und Formulare in Banken oder Medikamente in Krankenhäusern. Hierzu wird eine Vielzahl von Rohrpoststationen innerhalb des Gebäudes mit Rohrleitungen verbunden, die üblicherweise aus PVC bestehen. Daneben ist es auch bekannt, derartige Rohrleitungen aus Aluminium oder Stahlblech zu verlegen, wenn besondere Randumstände hinzutreten, beispielsweise eine hohe Wärmebelastung in Gießereien und dergleichen.

Die Rohrpoststationen können unterschiedlich ausgestattet sein, verfügen jedoch in aller Regel über ein Fahrrohr zum Zufahren, ein Fahrrohr zum Abfahren, über eine Einrichtung zum Einfahren einer Rohrpostbüchse und eine weitere Einrichtung zum Auswerfen einer ankommenden Rohrpostbüchse. Je nach Einbaulage der Rohrpoststation befindet sich die Auswerfposition in einer schräg nach unten weisenden Stellung, in der die Rohrpostbüchsen beispielsweise in einen Auffangbehälter fallen ; es ist jedoch auch bekannt, die Auswurfposition horizontal anzuordnen, so daß ankommende Rohrpostbüchsen, beispielsweise in einem Schreibtisch einer Schalterhalle einer Bank, in horizontaler Richtung ausgeworfen werden können.

Die Steuerung der verschiedenen Rohrpoststationen wird von einem zentralen Steuergerät vorgenommen, das einmal die unterschiedlichen Positionen der einzelnen Rohrpoststationen abfragt bzw. einstellt und zum anderen ein ebenfalls zentrales Druck- und Soggebläse steuert, so daß durch geeignete Einstellung von Druck oder Sog in der Rohrleitung und entsprechende Betätigung der unterschiedichen Positionen der Rohrpoststationen Rohrpostbüchsen an den einzelnen Stationen eingefahren und an einer vorbestimmten Zielstation wieder ausgeworfen werden können.

Bei der Gestaltung der Rohrpoststationen sind bereits zahlreiche Konstruktionen bekannt geworden, mit denen versucht wurde, die unterschiedlichen Funktionen des Zufahrens, Abfahrens, Einfahrens, Durchfahrens und Auswerfens zu realisieren.

Bei früheren Anlagen, wie sie beispielsweise in der DE-OS 19 46 548 beschrieben sind, führt eine gerade Rohrleitung durch eine derartige Rohrpoststation. Der in der Station befindliche Leitungsabschnitt ist in der Weise schwenkbar ausgebildet, daß sein eines Ende an die eine ankommende Rohrleitung mittels eines Faltenbalges angeschlossen ist, so daß der Leitungsabschnitt innerhalb der Station sowohl in axialer Richtung ausgelenkt wie auch seitlich weggeschwenkt werden kann. Seitlich ist am schwenkbaren Rohrleitungsabschnitt eine Kurvenführung angeordnet, so daß bei weggeschwenktem Abschnitt Rohrpostbüchsen, die aus der jetzt offenliegenden, zur Station führenden Rohrleitung austreten, an dieser Kurvenführung abrutschen und seitlich in einen Auffangbehälter geleitet werden. Gleichzeitig kann oben in den abgeschwenkten Leitungsabschnitt eine neue Rohrpostbüchse eingeführt werden.

Diese bekannte Einrichtung hat jedoch den Nachteil, daß zwei unterschiedliche Bewegungen des Leitungsabschnittes erforderlich sind, nämlich einmal ein axiales Wegbewegen des freien Endes des Rohrleitungsabschnittes aus einer zum Fahrrohr führenden Dichtung und zum anderen ein Wegschwenken, um ein Einfahren oder Auswerfen einer Rohrpostbüchse zu ermöglichen. Zum anderen fällt die mit hoher Geschwindigkeit ankommende Rohrpostbüchse, insbesondere dann, wenn sie ein hohes Gewicht aufweist, mit erheblichem Lärm in den Auffangbehälter, so daß eine derartige Station beispielsweise im Bürobereich oder im Schalterbereich einer Bank nicht einsetzbar ist. Schließlich unterliegen auch die verwendeten Bauelemente, insbesondere der Faltenbalg, bei häufiger Benutzung der Rohrpoststation einer erheblichen Abnutzung.

Bei einer Rohrpoststation gemäß DE-A1-30 09 345 ist demgegenüber ein trommelartiger Verteiler vorgesehen, bei dem in zwei einander gegenüberliegenden Stirnflächen unterschiedliche Anschlüsse zum Zufahren, Abfahren, Einfahren und Auswerfen von Rohrpostbüchsen vorgesehen sind. Diese Anschlüsse sind auf dem Umfange eines Kreises verteilt. Um eine Achse, die durch den Mittelpunkt des Kreises geht, ist die zwischen den Stirnflächen angeordnete Trommel drehbar. Die Trommel weist eine Mehrzahl von geraden und gekrümmten Rohrleitungen auf, wobei je nach Drehstellung der Trommel die einzelnen Anschlüsse miteinander verbindbar sind.

Diese Anordnung hat jedoch einmal den Nachteil, daß durch die Anordnung der Anschlüsse auf dem Umfang eines Kreises eine in der Tiefe relativ voluminöse Rohrpoststation entsteht, zum anderen erfordert auch die Umlenkung zwischen zwei Anschlüssen durch die drehbare Trommel mittels einer gebogenen Rohrleitung einen relativ großen Raumbedarf in der Höhe und schließlich ist für die Drehung der Trommel eine relativ lange Zeit erforderlich, so daß schnelle Umschaltvorgänge nicht durchgeführt werden können. Außerdem ist es erforderlich, zum Abbremsen von ankommenden Rohrpostbüchsen mechanische Verriegelungen vorzusehen, die störanfällig sind und beim Auftreffen von Rohrpostbüchsen zu einer Lärmbelästigung führen.

Bei der eingangs erwähnten Rohrverbindungsweiche gemäß DE-A1-30 40 979 durchsetzen den Rotor zwei sich kreuzende Kanäle, von denen der eine geradlinig und der andere bogenförmig verläuft. Der bogenförmige Kanal ist im mittleren Bereich erweitert, d. h. mit größerem Querschnitt versehen. Die Weiche ist an der einen Rahmenseite mit einem mittigen radialen Anschluß und zwei symmetrisch neben diesem liegenden weiteren radialen Anschlüssen versehen, wobei sich die Mittellinien dieser drei Anschlüsse in der Drehachse des Rotors schneiden. Diametral gegenüber vom ersten mittigen Anschluß liegt ein weiterer mittiger und ebenfalls radialer Anschluß, so daß die beiden mittigen Anschlüsse durch den gerade verlaufenden Kanal miteinander verbindbar sind. Demgegenüber können die beiden symmetrisch angeordneten Anschlüsse mit dem einzigen gegenüberliegenden mittigen Anschluß über den bogenförmigen Kanal verbunden werden.

Damit entsteht jedoch ein unstetiger Verlauf der Bewegungsbahn für die Rohrpostbüchse, weil die streng radialen Anschlüsse der Rohrleitungen in den bogenförmigen Kanal des Rotors übergehen, dessen lichte Weite sich nach innen verbreitert und der zusätzlich von einem quer verlaufenden weiteren Kanal geschnitten wird. Aufgrund der hohen Fahrgeschwindigkeiten von Rohrpostbüchsen manifestiert sich diese Unstetigkeit bzw. das Nachlassen einer seitlichen Führung durch erhebliche Lärmentwicklung, die außerdem mit Abnutzungserscheinungen an den Dichtungsringen der Rohrpostbüchsen einhergeht.

Weiterhin erfordert die bekannte Rohrverbindungsweiche zum Herstellen einer dichten Verbindung zwischen Rotor und Stutzen eine kegelige Ausbildung des Rotors, um einen kegeligen Dichtsitz des Rotors an den Stutzen zu ermöglichen. Da in dieser Position jedoch keine Drehbewegung des Rotors möglich ist, muß man den Rotor zum Drehen zunächst axial aus seinem kegeligen Dichtsitz lösen, in dieser gelösten Stellung drehen und anschließend wieder in Dichtsitz zurückfahren. Es liegt auf der Hand, daß dies nur bei druckloser Anlage möglich ist, da bei gelöstem Rotor ansonsten die Druckluft entweichen würde.

Der Erfindung liegt demgegenüber die Aufgabe zugrunde, eine Rohrpoststation der eingangs genannten Art dahingehend weiterzubilden, daß ein zuverlässiges und vollkommen stetiges Verbinden unterschiedlicher Anschlüsse der Station möglich ist, so daß die Geräuschentwicklung beim Ein- bzw. Durchfahren der Rohrpostbüchsen und die Abnutzung der Dichtungsringe der Büchsen minimiert wird. Weiterhin soll zusätzlich ein effektives Abbremsen ankommender Rohrpostbüchsen möglich sein, ohne zusätzliche Verriegelungselemente mit entsprechendem Steueraufwand betätigen zu müssen.

Diese Aufgabe wird erfindungsgemäß dadurch gelöst, daß der Rotor kreiszylindrisch ausgebildet und mit einem einzigen Kanal stetigen Durchmessers versehen ist, daß die Mittelsenkrechten der Stutzen eine horizontale, die Drehachse unter einem rechten Winkel schneidende Achse in einem ersten Abstand von der Drehachse des Rotors schneiden, daß am Rahmen ein weiterer Stutzen zum Anschluß einer Einfahrposition angeordnet ist, daß die Mittelsenkrechte des weiteren Stutzens die Achse in einem zweiten Abstand von der Drehachse schneidet, und daß alle Fahrrohre bogenförmig von dem Stutzen fort verlaufen.

Wenn der Rotor eine außerhalb der Öffnungen des Kanals in den Zylindermantel geschlossene Oberfläche aufweist, können die in die Rohrpoststation mündenden Anschlüsse verschlossen werden, indem der Rotor in eine Stellung gefahren wird, in der den Öffnungen der Anschlüsse ein Bereich mit geschlossener Oberfläche des Rotors gegenüber steht. Damit ist es vorteilhaft möglich, beispielsweise Rohrpostbüchsen in der einen Fahrposition zu halten, ohne daß mechanische Riegel erforderlich sind, und zum anderen können schnell ankommende Rohrpostbüchsen pneumatisch abgebremst werden, indem durch ein Einstellen einer Zwischenstellung des Rotors das Fahrrohr in Fahrtrichtung der Rohrpostbüchse kurzzeitig verschlossen wird.

Bei einer Ausgestaltung der Erfindung sind an einer Seite des Rahmens ein Fahrrohr und eine Einfahrposition und an der gegenüberliegenden Seite ein Fahrrohr angeschlossen. Diese Ausführungsform ermöglicht Rohrpoststationen, durch die die Rohrpostbüchsen besonders schnell hindurchgefahren werden können und in die Rohrpostbüchsen besonders einfach und schnell eingefahren werden können. Zweckmäßigerweise verlaufen die Richtungen der Achsen der Fahrrohre und der Einfahrposition dabei im wesentlichen senkrecht, so daß die Rohrpoststation in der üblichen Weise an einer Wand angeordnet sein kann.

Befindet sich in einem derartigen Fall im Bereich der gegenüberliegenden Seite ferner eine nach unten weisende Auswurfposition, können Rohrpoststationen aufgebaut werden, bei denen die Rohrpostbüchsen in an sich bekannter Weise nach unten in einen Auffangbehälter ausgeworfen werden. Diese Ausführungsform erfordert jedoch, daß die Rohrpoststation in einem gewissen Mindestabstand oberhalb des Geschoßbodens angeordnet ist.

Soll die Rohrpoststation demgegenüber unmittelbar auf dem Geschoßboden angeordnet sein, beispielsweise im Unterbau eines Schreibtisches, ist eine Ausführungsform bevorzugt, bei der sich im Bereich einer im wesentlichen um 90° gegenüber den Seiten geneigten weiteren Seite des Rahmens eine in horizontale Richtung weisende Auswurfposition befindet, wobei ein dieser Auswurfposition gegenüberliegender Stutzen an eine Druckleitung angeschlossen ist und in einer Auswurfstellung der Kanal den Stutzen mit der Auswurfposition verbindet. Bei dieser Ausgestaltung der Erfindung ist es vorteilhaft möglich, die ankommende Rohrpostbüchse zunächst abzustoppen, im Rotor aufzufangen und anschließend in eine horizontale Lage zu fahren, in der die Rohrpostbüchse vermittels des Druckes in der Druckleitung horizontal ausgeworfen wird. Diese Anordnung hat daher den besonderen Vorteil, daß die Rohrpostbüchse aus einer ruhenden Position ausgeworfen wird, so daß nur ein geringer Auswerfdruck erforderlich ist, der zu einem entsprechend geringen Auswerfgeräusch führt. Diese Ausführungsform der Erfindung ist daher besonders für den Einsatz in Großraumbüros, in Schalterhallen von Banken o. dgl. geeignet.

Ein besonders einfacher Aufbau ergibt sich für dieses Ausführungsbeispiel der Erfindung erfindungsgemäß dadurch, daß die Druckleitung eine zum Fahrrohr führende Bypassleitung ist. Gesonderte Steuerungselemente sind dann nicht erforderlich, weil die Bypassleitung in allen anderen Stellungen des Rotors von dessen geschlossener Oberfläche verschlossen ist. Lediglich in der horizontalen Auswerfstellung des Rotors wird dessen Kanal über die Bypassleitung mit Druck beaufschlagt, so daß bei Erreichen der horizontalen Auswerfstellung des Rotors die Rohrpostbüchse automatisch ohne weitere Steuerungsmaßnamen ausgeworfen wird. Das « weiche » Auswerfen der Rohrpostbüchse läßt sich dabei in einfacher Weise durch geeignete Dimensionierung des Querschnittes der Bypassleitung einstellen.

Um bei diesem Ausführungsbeispiel die ankommende Rohrpostbüchse abzubremsen, ist in weiterer Ausgestaltung der Erfindung vorgesehen, daß bei einer Stellung, in der sich eine Öffnung des Kanals gegenüber dem Stutzen des Fahrrohres befindet, die andere Öffnung einer raumfesten Verschlußplatte gegenübersteht.

Diese Ausführungsform hat den Vorteil, daß die Verschlußplatte das ankommende Fahrrohr pneumatisch verschließt, so daß die mit hoher Geschwindigkeit ankommende Rohrpostbüchse auf dem Luftpolster zwischen Rohrpostbüchse und Verschlußplatte abgebremst wird und sanft in den Rotor einläuft, wo sie schließlich auf der Verschlußplatte zum Stehen kommt. Gegenüber herkömmlichen Prallplatten, auf die die Rohrpostbüchse mit unverminderter Geschwindigkeit aufschlägt, bedeutet dies eine ganz erhebliche Verminderung des Geräuschpegels.

Um eine hinreichende Dichtung der druckführenden Rohre gegenüber dem Rotor der Rohrpoststation herzustellen, ist erfindungsgemäß weiter vorgesehen, daß diejenigen Stutzen, an die druckführende Rohre angeschlossen sind, mit einer gegenüber der Oberfläche des Rotors wirksamen Gleitdichtung versehen sind.

Vorzugsweise werden die Stutzen dabei mittels eines elastischen Elementes gegen die Oberfläche gedrückt. Diese Art der Dichtung hat den besonderen Vorteil, daß die Drehung des Rotors praktisch nicht behindert wird, gleichzeitig jedoch sowohl während der Drehung des Rotors wie auch während dessen Stillstand eine hohe Dichtwirkung erzielt wird. Dies führt, wie bereits erwähnt, dazu, daß die gesamte Rohrpostanlage lediglich geringe Leckverluste in den Stationen aufweist, die demzufolge selbst keine druckfesten Gehäuse mehr aufweisen müssen.

Vorzugsweise wird das elastische Andrücken des Stutzens an die Oberfläche des Rotors dadurch bewirkt, daß das elastische Element in einer Ringnut eines raumfesten Flansches liegt, in die eine ringförmige Feder des Stutzens greift. Diese ringförmige Nut/Federführung hat nicht nur den Vorteil, eine exakte axiale elastische Halterung des Stutzens zu bewirken, sie stellt darüber hinaus auch sicher, da der Stutzen bei Verdrehen des Rotors nicht seitlich auswandern kann.

Der Rotor ist bevorzugt als Gußteil, insbesondere Leichtmetall-Gußteil, ausgebildet und der durch den Rotor führende Kanal wird bevorzugt durch eine in das Gußteil eingesetzte Rohrleitung hergestellt, die vorzugsweise aus PVC besteht. Diese Maßnahme ergibt einmal eine mechanisch hochstabile, leicht herzustellende und verwindungssteife Konstruktion des Rotors und zum anderen durch Verwendung des PVC-Rohres als Kanal eine besonders stetige Führung der Rohrpostbüchse, weil sowohl der Kanal wie auch die Fahrrohre aus demselben Halbzeug bestehen. Die Rohrleitung kann in Kunststoff eingegossen werden, sodaß ein mit der Oberfläche des Rotors bündiges Kunststoffteil entsteht, wenn nach dem Eingießen die Rotoroberfläche abgedreht wird.

Erfindungsgemäß werden weiterhin die Rotoren der Rohrpoststationen von einem Motor angetrieben, der seine Steuersignale von einem elektronischen Steuergerät empfängt, das seinerseits mit im Verlauf der Fahrrohre angeordneten, auf vorbeifahrende Rohrpostbüchsen ansprechende Leitungssensoren sowie in den Stationen angeordnete Stellungssensoren verbunden ist, wobei das Steuergerät ferner ein zentrales Gebläse steuert.

Dabei ist eine Ausführungsform bevorzugt, bei der bei Heranfahren einer Rohrpostbüchse an eine Station zum Auswerfen in der Station der Rotor bei Ansprechen eines in definiertem Abstand von der Station angeordneten Leitungssensors in eine Zwischenstellung gefahren wird, in welcher der dem Fahrrohr der ankommenden Rohrpostbüchse zugeordneten Stutzen einem geschlossenen Abschnitt der Oberfläche des Rotors oder einer Verschlußplatte gegenübersteht.

Wie bereits weiter oben angedeutet, ergibt sich auf diese Weise ein besonders effektives Abbremsen der ankommenden Rohrpostbüchsen vor dem Einfahren in die Rohrpoststation zum Auswerfen in derselben, so daß die Geräuscht-

wicklung in der Rohrpoststation dadurch weiter vermindert wird. Vorteilhaft ist dabei, daß keine zusätzlichen Verschlußelemente für die Fahrrohre erforderlich sind, sondern daß das Verschliessen des ankommenden Fahrrohres lediglich durch Verdrehen des Rotors in eine Zwischenstellung bewirkt werden kann.

Schließlich kann bei einer weiteren Ausgestaltung der Erfindung die Geschwindigkeit der ankommenden Rohrpostbüchse noch durch zwei im Abstand angeordnete Leitungssensoren ermittelt und die Zwischenstellung des Rotors umso früher eingestellt werden, je größer die Geschwindigkeit der Rohrpostbüchse ist.

Diese Maßnahme hat den Vorteil, daß das unterschiedliche Fahrverhalten unterschiedlich schwerer Rohrpostbüchsen berücksichtigt werden kann. Eine mit hoher Geschwindigkeit ankommende Rohrpostbüchse kann durch relativ frühes Schliessen des Fahrrohres mittels Verdrehung des Rotors zeitig abgebremst werden, so daß die verbleibende Restgeschwindigkeit beim Einfahren der Rohrpostbüchse in die Rohrpoststation auch bei unterschiedlich schnellen Rohrpostbüchsen wenigstens näherungsweise gleich eingestellt werden kann. Damit ergibt sich auch bei schnell transportierten Rohrpostbüchsen keine höhere Geräuschentwicklung.

Weitere Vorteile ergeben sich aus der Beschreibung und der beigefügten Zeichnung.

Die Erfindung ist der Zeichnung dargestellt und wird in der nachfolgenden Beschreibung näher erläutert. Es zeigen :

Figur 1 eine schematische Darstellung einer Rohrpostanlage mit mehreren erfindungsgemäßen Rohrpoststationen ;

Figur 2a eine Seitenansicht einer erfindungsgemäßen Rohrpoststation in Durchfahrstellung ;

Figur 2b eine Detaildarstellung aus Fig. 2a in vergrößertem Maßstab zur Veranschaulichung der geometrischen Anordnung einzelner Bauelemente der Station ;

Figur 3a eine Darstellung gemäß Fig. 2a, jedoch in Auswurfstellung ;

Figuren 3b bis 3d schematische Darstellungen zur Veranschaulichung des Anfahr- und Auswurfvorganges ;

Figur 4 eine Darstellung gemäß Fig. 2a, jedoch in Einfahrstellung ;

Figur 5a eine Seitenansicht einer weiteren Ausführungsform einer erfindungsgemäßen Rohrpoststation mit horizontaler Auswurfposition ;

Figuren 5b und 5c schematische Darstellungen zur Veranschaulichung des Einfahr- und Auswurfvorganges bei der Ausführungsform gemäß Fig. 5a ;

Figur 6 in vergrößertem Maßstab eine Schnittdarstellung eines druckdichten Anschlußstutzens ;

Figur 7 in vergrößertem Maßstab eine Schnittdarstellung eines nichtdruckdichten Anschlußstutzens.

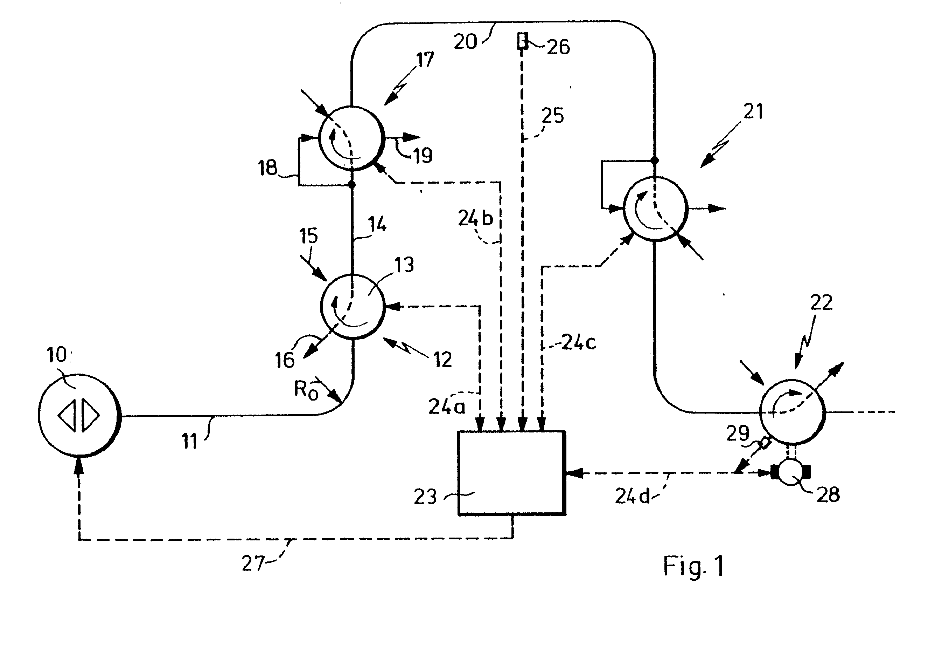

Bei der in Fig. 1 dargestellten Rohrpostanlage bezeichnet 10 ein zentrales Druck/Sog-Gebläse, an das ein Fahrrhor 11 angeschlossen ist. Das Fahrrohr 11 führt zu einer ersten Rohrpoststation 12, in der verschiedene Stellungen mittels eines Rotors 13 in weiter unten noch näher beschriebener Weise einstellbar sind. Mit diesen unterschiedlichen Stellungen können Verbindungen zwischen dem ankommenden Fahrrohr 11, einem abgehenden Fahrrohr 14, einer Einfahrposition 15 zum Beschicken der ersten Station 12 mit Rohrpostbüchsen sowie einer Auswurfposition 16 zum Auswerfen von ankommenden Rohrpostbüchsen hergestellt werden. Durch die Pfeile bei 15 und 16 soll in Fig. 1 angedeutet werden, daß die Beschickung der Rohrpoststation über die Einfahrposition von oben erfolgt, während die Auswurfposition 16 nach unten weist, so daß die Rohrpostbüchsen in einen darunter stehenden Auffangbehälter geworfen werden.

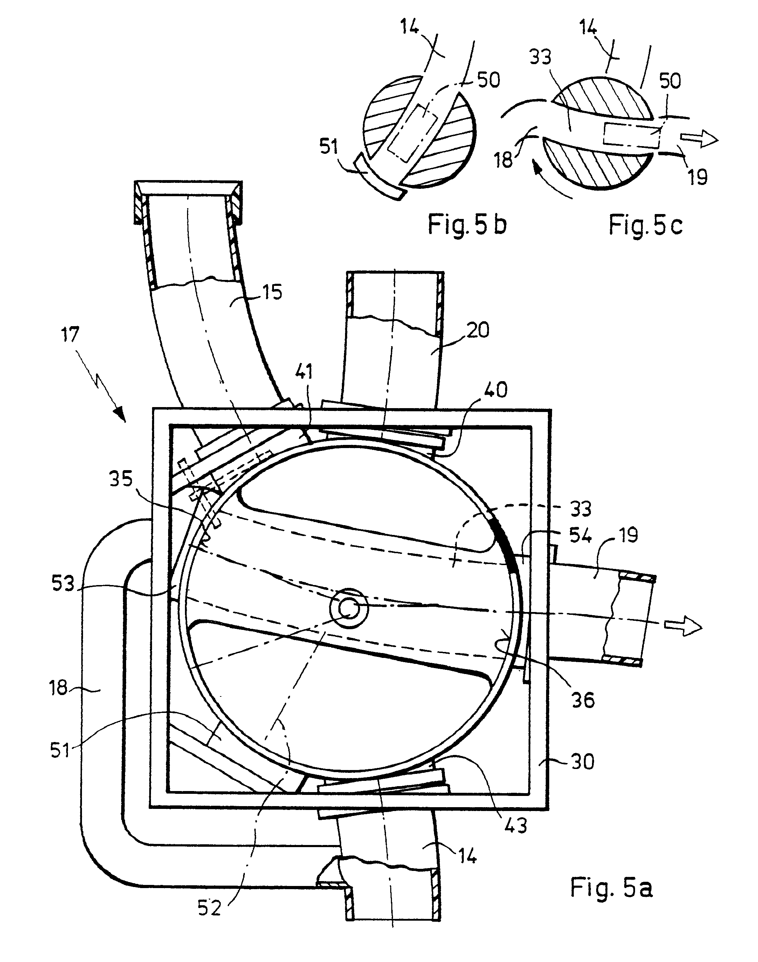

Das abgehende Fahrrohr 14 führt von der ersten Station 12 zu einer zweiten Station 17, die gemäß einem weiteren Ausführungsbeispiel der Erfindung ausgebildet ist. Hierzu ist eine Bypass-Leitung 18 vorgesehen, die von dem Fahrrohr 14 weg und horizontal in die zweite Station 17 führt. Hierdurch kann eine horizontale Auswerfposition 19 bei der zweiten Station 17 realisiert werden, wie dies weiter unten zu Fig. 5a bis 5c noch im einzelnen erläutert wird.

Von der zweiten Station 17 führt ein Fahrrohr 20 zu einer dritten Station 21 sowie einer vierten Station 22, die analog den Stationen 17 bzw. 13 ausgebildet sind.

Die dargestellte Rohrpostanlage ist selbstverständlich nur beispielhaft zu verstehen, es können selbstverständlich auch andere, komplizierter vernetzte Anlagen vorgesehen sein. Die Fahrrohre 11, 14, 20 sind in der üblichen Weise in einem Gebäude oder Gebäudekomplex verlegt, wobei in bekannter Weise ein minimaler Kurvenradius $R_0$ nicht unterschritten wird.

Zur Steuerung der Rohrpostanlage gemäß Fig. 1 dient ein zentrales elektronisches Steuergerät 23. Das Steuergerät 23 ist über bidirektionale Steuerleitungen 24a, 24b, 24c, 24d mit den Stationen 12, 17, 21, 22 verbunden.

Weiterhin sind unidirektionale Steuerleitungen 25 vorgesehen, über die dem Steuergerät 23 Signale von Leitungssensoren 26 zuführbar sind. Diese Leitungssensoren 26 dienen dazu, die Position von Rohrpostbüchsen innerhalb des Fahrrohrsystems zu erfassen und damit Steuerbefehle für die jeweils nächste angelaufene Station zu erzeugen.

Die Rotoren 13 der Stationen 12, 17, 21, 22 werden von Motoren angetrieben, von denen einer bei der vierten Station 22 mit 28 angedeutet ist. Die Motoren 28 treiben die Rotoren 13 über nicht dargestellte Mittel, beispielsweise Riementriebe, Zahnradgetriebe o. dgl. an. Außerdem weisen die Stationen 12, 17, 21, 22 Stellungssensoren 29 auf, mit denen beispielsweise erkannt werden kann, ob sich eine Rohrpostbüchse in der Einfahrposition 15 befindet und darauf wartet, abgeholt zu werden. Außerdem ist es möglich, über die Stellungssensoren 29 die jeweilige Drehstellung der Rotoren 13 zu erfassen, beispielsweise dann,

wenn die Anlage insgesamt in Betrieb genommen wird, und definierte Ausgangsstellungen eingestellt werden müssen.

Über die bidirektionalen Steuerleitungen 24a bis 24d werden demnach in einer Richtung Steuersignale für die Motoren 28 und in der anderen Richtung Steuersignale von den Stellungssensoren 29 für das Steuergerät 23 übertragen.

Schließlich steuert das Steuergerät 23 noch über eine weitere Steuerleitung 27 das zentrale Gebläse 10, so daß durch Einstellen von Druck oder Sog innerhalb des Fahrrohrsystems die Fahrtrichtung von Rohrpostbüchsen einstellbar ist.

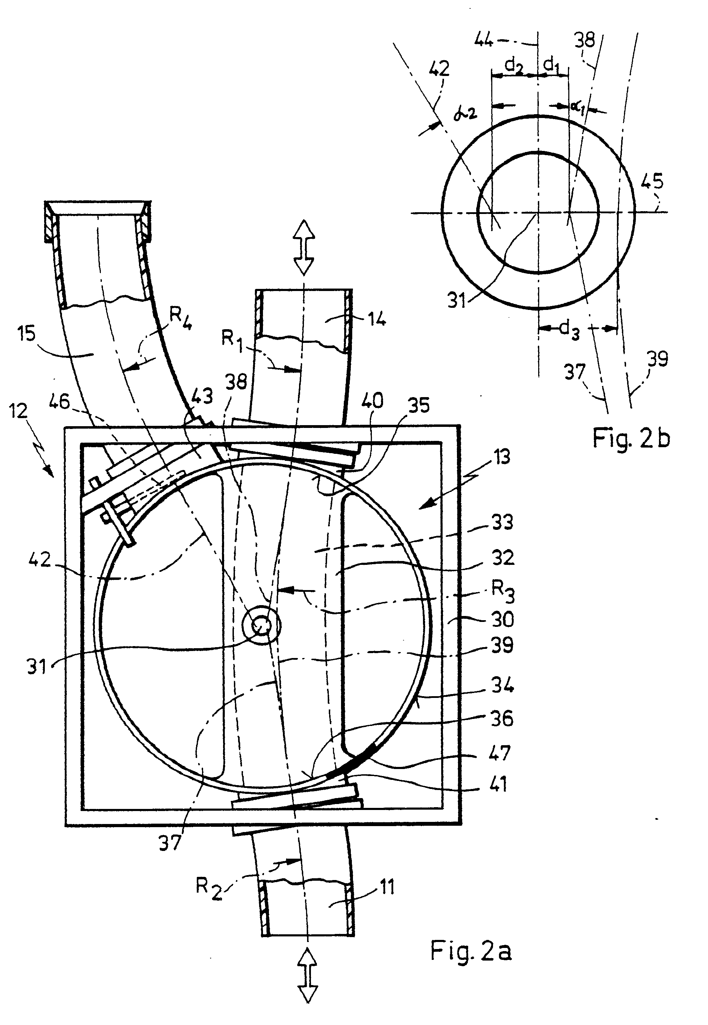

Fig. 2a zeigt in der Seitenansicht eine erste Ausführungsform einer erfindungsgemäßen Rohrpoststation, wie sie beim System gemäß Fig. 1 verwendet werden kann. Die in Fig. 2a dargestellte Rohrpoststation entspricht der ersten Station 12 sowie der vierten Station 22 in Fig. 1.

Der Rotor 13 ist beim Ausführungsbeispiel gemäß Fig. 2a in einem vorzugsweise quadratischen Rahmen 30 angeordnet und um eine Achse 31 drehbar. Der Rotor 13 ist ein Gußteil, vorzugsweise ein Leichtmetall-Gußteil in zylindrischer Gestalt. Durch den Rotor 13 hindurch führt ein Verbindungsteil 32, das einen Kanal 33 umschließt. Der Kanal 33 mündet in die ansonsten geschlossene Oberfläche 34 des Rotors 13 mit einer ersten Öffnung 35 und einer zweiten Öffnung 36.

Bei der in Fig. 2a dargestellten Durchfahrposition der Rohrpoststation 12 ist die erste Öffnung 35 dem Fahrrohr 14 und die zweite Öffnung 36 dem Fahrrohr 11 zugewandt.

Die relative Anordnung und Neigung der einzelnen Elemente des Ausführungsbeispieles gemäß Fig. 2a zueinander ergibt sich insbesondere aus der vergrößerten Darstellung gemäß Fig. 2b.

Man erkennt aus Fig. 2a und 2b, daß die Mittelsenkrechte 37 der ersten Öffnung 35 sowie die Mittelsenkrechte 38 der zweiten Öffnung 36 gegenüber Bezugsachsen 44, 45, die den Achsen des Rahmens 30 beim dargestellten Ausführungsbeispiel entsprechen, geneigt ist. Beim dargestellten Ausführungsbeispiel ist der Neigungswinkel mit $\alpha_1$ bezeichnet und ist für die Mittelsenkrechten 37 und 38 gleich groß. Außerdem erkennt man aus Fig. 2b, daß die Mittelsenkrechten 37, 38 sich nicht in der Achse 31 des Rotors 13 schneiden, sondern in einem Abstand $d_1$ hiervon. Diese exzentrische Anordnung des Schnittpunktes der Mittelsenkrechten 37, 38 gegenüber der Achse 31 führt dazu, daß auch die Mittellinie 39 des Kanales 33 nicht durch die Achse 31 des Rotors 13 führt, sondern in einem Abstand $d_3$ an dieser vorbeiläuft.

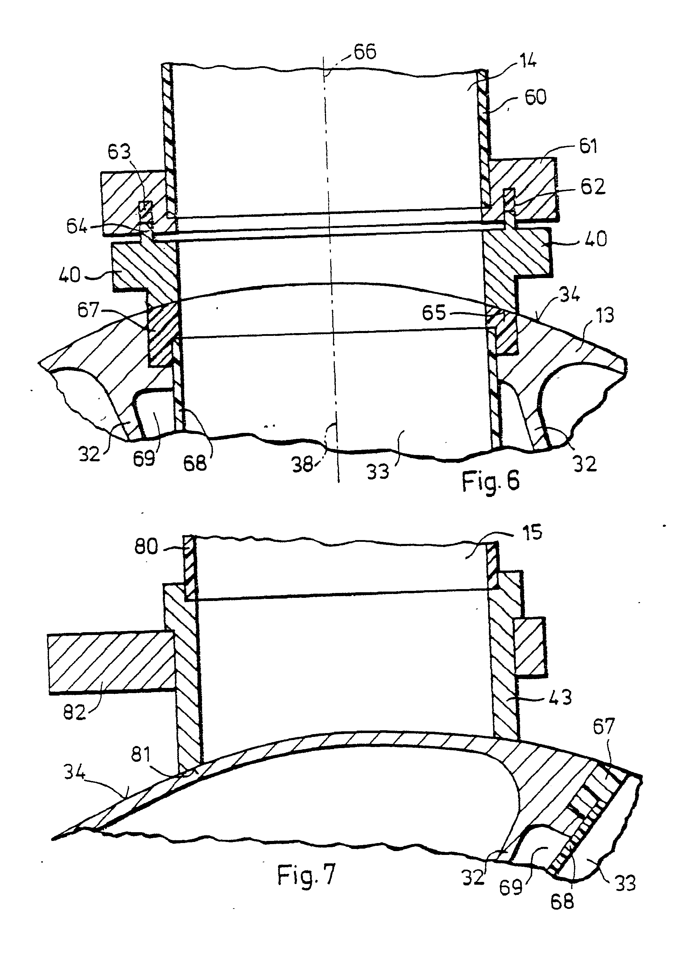

Die Öffnungen 35, 36 des Kanales 33 schließen druckdicht an einen ersten Stutzen 40 bzw. einen zweiten Stutzen 41 an, dessen Einzelheiten weiter unten zu Fig. 6 noch ausführlich erläutert werden. Die Mittelsenkrechte der Querschnittsebene der Stutzen 40, 41 stimmt mit den Mittelsenkrechten 37, 38 überein.

Weiterhin ist am Rahmen 30 noch in nichtdruckdichter dritter Stutzen 43 angeordnet, dessen Einzelheiten weiter unten zu Fig. 7 noch im einzelnen erläutert werden. Dieser dritte Stutzen 43 dient zum Anschluß der Einfahrposition 15. Die Mittelsenkrechte 42 der Querschnittsebene des dritten Stutzens 43 ist, wie man ebenfalls aus Fig. 2b entnehmen kann, gleichfalls um einen Winkel gegenüber den Bezugsachsen 44, 45 geneigt, der in Fig. 2b bezüglich der Achse 44 mit $\alpha_2$ bezeichnet ist. Außerdem schneidet die Mittelsenkrechte 42 die andere Achse 45 in einem Abstand $d_2$ von der Achse 31 des Rotors 13.

Bei dem dargestellten Ausführungsbeispiel in Fig. 2a weist das in den ersten Stutzen 40 mündende Fahrrohr 14 einen Krümmungsradius $R_1$ auf, das in den zweiten Stutzen 41 mündende Fahrrohr 11 einen Krümmungsradius $R_2$ und die in den dritten Stutzen 43 mündende Einfahrposition 15 einen Krümmungsradius $R_4$. Schließlich weist der Kanal 33 innerhalb des Verbindungsteiles 32 ebenfalls einen gekrümmten Verlauf auf, der Krümmungsradius ist in Fig. 2a mit $R_3$ bezeichnet.

Bei einem praktischen Ausführungsbeispiel einer erfindungsgemäßen Rohrpoststation ergaben sich die folgenden Zahlenwerte :

$\alpha_1 = 8{,}233°$
$\alpha_2 = 29{,}049°$
$R_1 = 1\ 250$ mm
$R_2 = 1\ 250$ mm
$R_3 = 1\ 250$ mm
$R_4 = 550$ mm
$d_1 = 6{,}98$ mm
$d_2 = 6{,}98$ mm
$d_3 = 20$ mm,

wobei sich die drei letztgenannten Zahlenwerte ($d_1$, $d_2$, $d_3$) auf einen Rotordurchmesser von 400 mm beziehen.

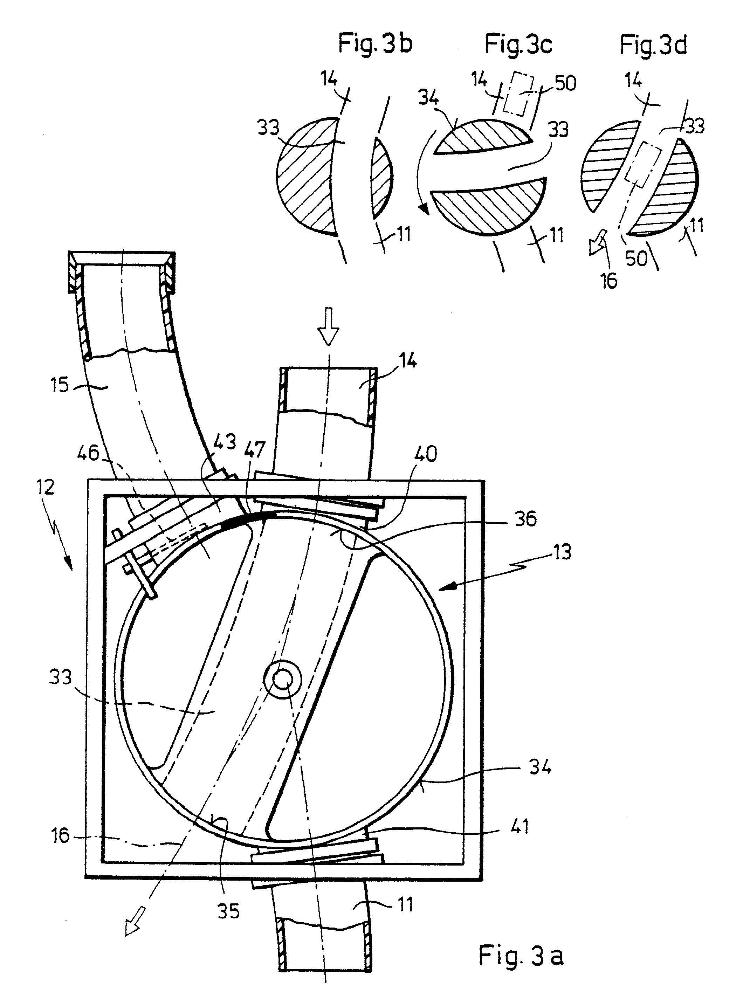

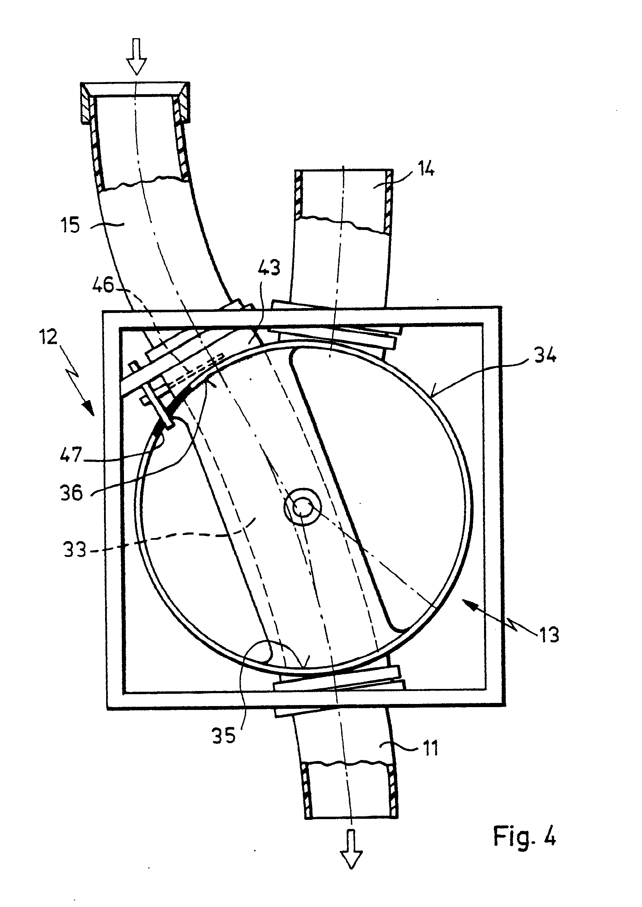

Es wurde im Rahmen der vorliegenden Erfindung gefunden, daß die exzentrische Anordnung der Mittelsenkrechten 37, 38, 42 bzw. der Mittellinie 39 gegenüber der Achse 31 des Rotors 13 zusammen mit dem gleichen Krümmungsradius $R_1 = R_2 = R_3$ des ankommenden (14) bzw. abgehenden (11) Fahrrohres sowie des Kanales 33 zu einem vollkommen stetigen Verlauf der Bewegungsbahn der Rohrpostbüchse sowohl in der Durchfahrstellung, wie sie Fig. 2a zeigt, führt, wie auch in den anderen Arbeitsstellungen der Rohrpoststation, die in den nachfolgenden Figuren erläutert sind. Es ergibt sich demnach eine absolut « passende » Verbindung zwischen den einzelnen Anschlüssen in den drei Arbeitsstellungen « Durchfahren » (Fig. 2a), « Auswerfen » (Fig. 3a) sowie « Einfahren » (Fig. 4).

Fig. 3a zeigt die Auswerfstellung des zu Fig. 2a erläuterten Ausführungsbeispieles einer erfindungsgemäßen Rohrpoststation.

Zunächst befindet sich die Rohrpoststation in der Durchfahrstellung gemäß Fig. 2a, wie sie in Fig. 3b nochmals schematisch dargestellt ist. In dieser Position kann die Druckluft frei durch die Station hindurchströmen, so daß die Rohrpostbüchsen transportiert werden können. Nähert
sich nun eine Rohrpostbüchse der Station, was
durch einen Leitungssensor 26, der zu Fig. 1
erläutert wurde, erkannt wird und soll die ankommende Rohrpostbüchse in der Station ausgeworfen werden, erzeugt das Steuergerät 23 einen
Befehl für den Motor 28, der den Rotor 13 im
Gegenuhrzeigersinne dreht. Der Rotor 13 gelangt
nun zunächst in eine Zwischenstellung, die in
Fig. 3c eingezeichnet ist. In dieser Zwischenstellung wird das Fahrrohr 14 durch die geschlossene Oberfläche 34 des Rotors- 13 verschlossen, so daß die ankomme Rohrpostbüchse 50 durch das Luftpolster zwischen Büchse
und Rotor abgebremst wird. Infolge des
Schlupfes zwischen Büchse und Fahrrohr tritt
eine weiche Abbremsung der Büchse 1 ein, so
daß diese schließlich weich auf die Oberfläche 34
des Rotors 13 aufsetzt. Der Rotor 13 wird nun
weiter im Gegenuhrzeigersinne durch den Motor
28 gedreht, so daß die Rohrpostbüchse 50 durch
den Kanal 33 hindurchrutscht und zur Auswurfposition 16 gelangt. Infolge der durch die Bremsung
stark verminderten kinetischen Energie der Rohrpostbüchse 50 erfolgt das Auswerfen mit nur sehr
geringem Geräusch.

Bei geeigneter Distanzierung des Leitungssensors 26 zur Rohrpoststation kann die Drehgeschwindigkeit des Rotors 13 so eingestellt
werden, daß sich der Rotor 13 kontinuierlich von
der Ausgangsstellung gemäß Fig. 3b in die Auswerfstellung gemäß Fig. 3d drehen kann, weil der
Abbremsvorgang der Rohrpostbüchse 50 dann so
eingestellt ist, daß diese in dem Augenblick auf
den Rotor 13 auftrifft, in dem der. Kanal 33 mit
dem Fahrrohr 14 fluchtet.

Fig. 4 zeigt das in den Fig. 2a und 3a dargestellte Ausführungsbeispiel einer erfindungsgemäßen
Rohrpoststation in der Einfahrstellung.

Wie man aus den seitherigen Fig. 2a und 3a
ohne weiteres erkennt, ist der Stutzen 43 der
Einfahrposition 15 in allen anderen Stellungen
des Rotors 13 durch die geschlossene Oberfläche
34 des Rotors 13 verschlossen. Eine in die Einfahrposition 15 eingeführte Rohrpostbüchse liegt
auf einer mechanischen Verriegelung in Gestalt
eines in die Einfahrposition 15 einschwenkbaren
Fingers 46 auf. Soll nun die Rohrpostbüchse
eingefahren werden, dreht der Motor 28 den
Rotor 13 in die in Fig. 4 dargestellte Stellung, in
der die Öffnung 36 des Kanals 33 dem dritten
Stutzen 43 zugewandt ist. In dieser Stellung
öffnet eine an dem Umfang des Rotors 13 angeordnete Kurve 47 die Einfahrposition 15 zwangsweise, indem der Finger 46 über ein nicht dargestelltes Gestänge aus der Einfahrposition 15
herausgeschwenkt wird. Nach Verlassen der
Stellung wird der Finger 46 sofort wieder eingeschwenkt. Die Rohrpostbüchse gleitet nun infolge
der Schwerkraft oder durch Einstellen eines Unterdruckes im Fahrrohr 11 in dieses hinein und
kann zur Bestimmungsstation transportiert
werden.

Man erkennt aus Fig. 4, daß infolge des gekrümmten Verlaufes des Kanales 33 auch in
dieser Stellung eine stetige Verbindung der Einfahrposition 15 mit dem Fahrrohr 11 vorliegt.

Fig. 5a zeigt eine Variante einer erfindungsgemäßen Rohrpoststation.

Wie man insbesondere aus der Darstellung
gemäß Fig. 3a erkennt, war die Auswurfposition
16 bei dem zuvor beschriebenen Ausführungsbeispiel nach unten gerichtet, so daß die Rohrpoststation 12 nur in einer Lage eingebaut werden
kann, in der noch genügend Freiraum zwischen
der Rohrpoststation 12 und dem Geschoßboden
verbleibt, in dem ein Auffangbehälter für die
Rohrpostbüchsen aufgestellt werden kann. Dies
ist jedoch nicht in allen Anwendungsfällen möglich, beispielsweise dann, wenn die Rohrpoststation in einem Schreibtisch eingebaut werden soll,
in dem sie sich praktisch in der Höhe des Geschoßbodens befindet. Zwar kann dann das Fahrrohr (11 bzw. 14) durch den Geschoßboden hindurch in eine darunterliegende Installationszwischendecke geleitet werden, ein Auswerfen der
Rohrpostbüchsen nach unten ist aus Raumgründen jedoch dann nicht möglich.

Für derartige Anwendungsfälle ist das Ausführungsbeispiel gemäß Fig. 5a gedacht, bei dem
die Auswerfposition 19 in horizontale Richtung
weist.

Hierzu ist das Ausführungsbeispiel gemäß den
Fig. 2a, 3a und 4 in zweierlei Hinsicht verändert.
Zum einen ist am Rahmen 30 in derjenigen
Winkelstellung, die der Auswurfposition 16 gemäß
Fig. 3a entspricht, eine raumfeste, druckdichte
Verschlußplatte 51 angeordnet. Zum anderen
führt vom Fahrrohr 14 die Bypassleitung 18 zu
einem vierten Stutzen 53. Schließlich ist auf der
gegenüberliegenden Seite des Rahmens 30 ein
fünfter Stutzen 54 vorgesehen, in den die horizontale Auswurfposition 19 mündet.

Wie man am besten der schematischen Darstellung gemäß Fig. 5b entnimmt, wird bei ankommender Rohrpostbüchse 50, die in der Station 17
ausgeworfen werden soll, der Rotor 13 aus der
Durchfahrstellung gemäß Fig. 2a oder Fig. 3b mittels des Motors 28 in eine Stellung gefahren, in
der die Öffnung 36 des Kanals 33 dem Fahrrohr
14 zuweist und die gegenüberliegende Öffnung
35 durch die Verschlußplatte 51 verschlossen ist.
Es bildet sich nun wieder zwischen der Rohrpostbüchse 50 und der Verschlußplatte 51 ein Luftpolster, das die Rohrpostbüchse 50 abbremst, bis sie
schließlich sanft auf die Verschlußplatte 51 auftrifft. Ist dies der Fall, wird der Rotor 13 im
Gegenuhrzeigersinn weitergedreht, bis der Kanal
33 in eine näherungsweise horizontale Position
gelangt, in der er die Stutzen 53 und 54 miteinander verbindet. In dieser, in Fig. 5a und Fig. 5c
dargestellten Auswurfstellung, gelangt Druckluft
aus dem Fahrrohr 14 durch die Bypassleitung 18
auf die linke Seite der Rohrpostbüchse 50, die
demzufolge nach rechts über die Auswurfposition
19 ausgeworfen wird. Weil die Rohrpostbüchse
50 zu Beginn des Auswerfvorganges ruhig lag, ist
nur ein verhältnismäßig geringer Druck über die
Bypassleitung 18 erforderlich, so daß der Auswerfvorgang sehr behutsam und geräuscharm verläuft.

Es versteht sich, daß die Stutzen 53, 54 in entsprechender Weise zueinander angeordnet sind, wie der erste Stutzen 40 zur Verschlußplatte 51 bzw. der dritte Stutzen 43 zum zweiten Stutzen 41.

In Fig. 6 ist in vergrößerter Darstellung im Schnitt ein druckdichter Stutzen dargestellt, wie er für die Stutzen 40, 41, 53 sowie in entsprechender Form für die Verschlußplatte 51 verwendet wird. Beispielhaft ist dabei der erste Stutzen 40 dargestellt.

Das ankommende Fahrrohr 14 wird durch ein PVC-Rohr 60 gebildet, das aber selbstverständlich auch aus einem anderen Material, beispielsweise Aluminium oder Blech, bestehen kann. Das Rohr 60 mündet in einen Ringflansch 61, der mit einer zum Rotor 13 weisenden Ringnut 62 versehen ist. In der Ringnut 62 liegt ein ebenfalls ringförmiges elastisches Element 63, das beispielsweise aus einem schaumgummiartigen Körper bestehen kann. In der Ringnut 62 verläuft ferner eine ringförmige Feder 64 des ersten Stutzens 40, wobei die ringförmige Feder 64 einmal von der Ringnut 62 geführt wird und sich zum anderen elastisch auf dem elastischen Element 63 abstützt. Infolge dieser elastischen Abstützung liegt der erste Stutzen 40 federnd auf dem Umfang des Rotors 13 auf. Bei der in Fig. 6 dargestellten Verbindungstellung zwischen Kanal 33 und Fahrrohr 14, bei der die Mittelsenkrechte 38 des Kanals 33 mit einer Achse 66 des ersten Stutzens 40 fluchtet, liegt die an die konvexe Oberfläche 34 des Rotors 13 angepaßte konkave Oberfläche 65 des ersten Stutzens 40 auf einem Kunststoffeinsatz 67 auf, der sich im Randbereich des Kanales 33 bündig in die Oberfläche 34 des Rotors 13 einfügt. Dieser Kunststoffeinsatz 67 entsteht beispielsweise beim Eingießen einer Rohrleitung 68, die im folgenden beschrieben wird.

Wie man weiterhin aus Fig. 6 erkennt, wird der Kanal 33 im Rotor 13 bei diesem Ausführungsbeispiel durch eine Rohrleitung 68, vorzugsweise ebenfalls aus PVC, gebildet, die innerhalb eines vom Verbindungsteil 32 umschlossenen Hohlraumes 69 verläuft.

Wie zu Fig. 2a und 2b ausführlich erläutert, sind der Kanal 33, der Flansch 40 sowie das Fahrrohr 14 so zueinander ausgerichtet bzw. gekrümmt, daß in Verbindung mit dem kurzen, durch den Stutzen 40 gebildeten, zylindrischen Fahrrohrabschnitt eine vollkommen stetige Bewegungsbahn für die Rohrpostbüchsen entsteht.

Schließlich zeigt Fig. 7 noch einen nicht-druckdichten Stutzen, wie er in den dargestellten Ausführungsbeispielen für die Stutzen 43 und 54 verwendet werden kann.

Bei dem als Beispiel dargestellten dritten Stutzen 43 wird die Einfahrposition 15 durch ein PVC-Rohr 80 gebildet, das von oben in den Stutzen 43 eingesetzt ist. Dessen, der konvexen Oberfläche 34 des Rotors 13 angepaßte konkave Oberfläche 81 befindet sich mit gewissem Spiel gegenüber dem Rotor 13, so daß zwar eine präzise Führung beim Einfahren einer Rohrpostbüchse aus der Einfahrposition 15 bzw. beim Auswerfen aus der horizontalen Auswerfpostion 19 gewährleistet ist, jedoch der Aufwand für eine druckdichte Stutzenverbindung nicht getrieben zu werden braucht.

## Patentansprüche

1. Rohrpoststation mit einer Mehrzahl Anschlüsse zum Zufahren und Abfahren von Rohrpostbüchsen (50), mit einem Rahmen (30) und einem in der Rahmenebene drehbaren Rotor (13), den zum wahlweisen Verbinden der in der Rahmenebene verlaufenden Anschlüsse ein Kanal (33) mit bogenförmigem Verlauf durchsetzt, dessen Mittellinie (39) in einem Abstand ($d_3$) an der Drehachse (31) des Rotors (13) vorbeiläuft, wobei die Anschlüsse durch vom Rahmen (30) gehaltene Stutzen (40, 41), deren Mittelsenkrechten (37, 38) schiefwinklig zueinander verlaufen, zum Anschluß von bogenförmigen Fahrrohren (11, 14) gebildet werden, derart, daß in einer Verbindungsstellung des Rotors (13) die Mittellinie (39) des Kanals (33) stetig in die Mittelsenkrechte (37, 38, 42) der miteinander verbundenen Stutzen und die Mittellinien der bogenförmigen Fahrrohre (11, 14, 15) übergeht, dadurch gekennzeichnet, daß der Rotor (13) kreiszylindrisch ausgebildet und mit einem einzigen Kanal (33) stetigen Durchmessers versehen ist, daß die Mittelsenkrechten (37, 38) der Stutzen (40, 41) eine horizontale, dei Drehachse (31) unter einem rechten Winkel schneidende Achse (45) in einem ersten Abstand ($d_1$) von der Drehachse (31) des Rotors (13) schneiden, daß am Rahmen (30) ein weiterer Stutzen (43) zum Anschluß einer Einfahrposition angeordnet ist, daß die Mittelsenkrechte (42) des weiteren Stutzens (43) die Achse (45) in einem zweiten Abstand ($d_2$) von der Drehachse (31) schneidet, und daß alle Fahrrohre (11, 14, 15) bogenförmig von dem Stutzen (40, 41, 43) fort verlaufen.

2. Rohrpoststation nach Anspruch 1, dadurch gekennzeichnet, daß der Rotor (13) eine außerhalb der Öffnungen (35, 36) des Kanales (33) in den Zylindermantel geschlossene Oberfläche (34) aufweist.

3. Rohrpoststation nach einem der Ansprüche 1 und 2, dadurch gekennzeichnet, daß an einer Seite des Rahmens (30) ein Fahrrohr (14) und eine Einfahrposition (15) und an der gegenüberliegenden Seite ein Fahrrohr (11) angeschlossen sind.

4. Rohrpoststation nach Anspruch 3, dadurch gekennzeichnet, daß die Achsen der Fahrrohre (11, 14) und der Einfahrposition (15) im wesentlichen in senkrechter Richtung verlaufen.

5. Rohrpoststation nach Anspruch 3 oder 4, dadurch gekennzeichnet, daß eine Verriegelung in der Einfahrposition (15) vorgesehen ist, die dann und nur dann, wenn der Rotor (13) sich in einer Stellung befindet, in der die Rohrpostbüchse eingefahren werden soll, zwangsweise entriegelt wird.

6. Rohrpoststation nach Anspruch 4 oder 5, dadurch gekennzeichnet, daß sich im Bereich der gegenüberliegenden Seite ferner eine nach unten weisende Auswurfposition (16) befindet.

7. Rohrpoststation nach Anspruch 4 oder 5, dadurch gekennzeichnet, daß sich im Bereich einer im wesentlichen um 90° gegenüber den Seiten geneigten weitere Seite des Rahmens (30) eine in horizontale Richtung weisende Auswurfposition (19) befindet, daß ein dieser Auswurfposition (19) gegenüberliegender Stutzen (53) an eine Druckleitung angeschlossen ist und daß in einer Auswurfstellung der Kanal (33) den Stutzen (53) mit der Auswurfposition (19) verbindet.

8. Rohrpoststation nach Anspruch 7, dadurch gekennzeichnet, daß die Druckleitung eine zum Fahrrohr (14) führende Bypassleitung (18) ist.

9. Rohrpoststation nach Anspruch 7 oder 8, dadurch gekennzeichnet, daß bei einer Stellung, in der sich eine Öffnung (36) des Kanales (33) gegenüber dem Stutzen (40) des Fahrrohres (20) befindet, die andere Öffnung (35) einer raumfesten Verschlußplatte (51) gegenübersteht.

10. Rohrpoststation nach einem der Ansprüche 1 bis 9, dadurch gekennzeichnet, daß diejenigen Stutzen (40, 41, 53), die an die druckführenden Rohre (11, 14, 18, 20) angeschlossen sind, mit einer gegenüber der Oberfläche (34) des Rotors (13) wirksamen Gleitdichtung versehen sind.

11. Rohrpoststation nach Anspruch 10, dadurch gekennzeichnet, daß die Stutzen (40) mittels eines elastischen Elementes (63) gegen die Oberfläche (34) gedrückt werden.

12. Rohrpoststation nach Anspruch 11, dadurch gekennzeichnet, daß das elastische Element (63) in einer Ringnut (62) eines raumfesten Flansches (61) liegt, in die eine ringförmige Feder (64) des Stutzens (40) greift.

13. Rohrpoststation nach einem der Ansprüche 10 bis 12, dadurch gekennzeichnet, daß wenigstens eine der in einer Verbindungsstellung des Rotors (13) aneinandergrenzenden Oberflächen (34, 65) des Rotors (13) bzw. Stutzens (40) durch ein Kunststoffteil (67) gebildet ist.

14. Rohrpoststation nach einem der Ansprüche 1 bis 13, dadurch gekennzeichnet, daß der Rotor (13) ein Gußteil, vorzugsweise ein Leichtmetall-Gußteil, ist und daß der Kanal (33) durch eine in das Gußteil eingesetzte Rohrleitung (68), vorzugsweise aus PVC, gebildet ist.

15. Rohrpoststation nach einem der Ansprüche 1 bis 14, dadurch gekennzeichnet, daß der Rotor (13) von einem Motor (28) angetrieben wird, der seine Steuersignale von einem elektronischen Steuergerät (23) empfängt, daß seinerseits mit im Verlauf der Fahrrohre (11, 14, 20) angeordneten, auf vorbeifahrende Rohrpostbüchsen (50) ansprechende Leitungssensoren (26) sowie in den Stationen (12, 17, 21, 22) angeordneten Stellungssensoren (29) verbunden ist, wobei das Steuergerät (23) ferner ein zentrales Gebläse (10) steuert.

16. Rohrpoststation nach Anspruch 15, dadurch gekennzeichnet, daß bei Heranfahren einer Rohrpostbüchse (50) an eine Station (12, 17, 21,

22) zum Auswerfen in der Station (12, 17, 21, 22) der Rotor (13) bei Ansprechen eines in definiertem Abstand von der Station (12, 17, 21, 22) angeordneten Leitungssensors (26) in eine Zwischenstation gefahren wird, in welcher der dem Fahrrohr (11, 14, 20) der ankommenden Rohrpostbüchse (50) zugeordnete Stutzen (40) einem geschlossenen Abschnitt der Oberfläche (34) des Rotors (13) oder einer Verschlußplatte (51) gegenübersteht.

17. Rohrpoststation nach Anspruch 16, dadurch gekennzeichnet, daß die Geschwindigkeit der ankommenden Rohrpostbüchse (50) durch zwei im Abstand angeordnete Leitungssensoren (26) ermittelt und die Zwischenstellung des Rotors (13) umso früher eingestellt wird, je höher die Geschwindigkeit ist.

**Claims**

1. Pneumatic despatch station with a plurality of connections for inwards and outwards movement of pneumatic despatch carriers (50), with a frame (30) and rotatable in the frame plane, a rotor (13) which, for optional linking of the connections extending in the frame plane, is traversed by a duct (33) extending in an arcuate pattern, of which the median line (39) passes at a distance ($d_3$) by the axis of rotation (31) of the rotor (13), the connections being formed by unions (40, 41) supported by the frame (30) and of which the median perpendiculars (37, 38) extend obliquely to one another, for the connection of arcuate despatch tubes (11, 14) so that in any one point of connection of the rotor (13), to the central line (39) through the duct (33) merges continuously into the median perpendicular (37, 38, 42) of the interconnected unions and the central lines through the arcuate despatch tubes (11, 14, 15), characterised in that the rotor (13) is of circularly cylindrical construction and is provided with a single duct (33) of constant diameter, and in that the median perpendiculars (37, 38) of the unions (40, 41) intersect a horizontal axis (47) which cuts the axis of rotation (31) at a right angle, at a first distance ($d_1$) from the axis of rotation (31) of the rotor (13) and in that on the frame (30), a further union (43) is provided for connection of an incoming despatch position, and in that the median perpendicular (42) of the further union (43) cuts the axis (45) at a second distance ($d_2$) from the axis of rotation (31) and in that all despatch tubes (11, 14, 15) extend arcuately away from the union (40, 41, 43).

2. Pneumatic despatch station according to Claim 1, characterised in that the rotor (13) has a surface (34) closed into the cylinder shell outside the apertures (35, 36) of the duct (33).

3. Pneumatic despatch station according to one of Claims 1 and 2, characterised in that a despatch tube (14) and an incoming despatch position (15) are connected to one side of the frame (30) while a despatch tube (11) is connected to the opposite side.

4. Pneumatic despatch station according to Claim 3, characterised in that the axes of the despatch tubes (11, 14) and the incoming despatch position (15) extends substantially in a vertical direction.

5. Pneumatic despatch station according to Claim 3 or 4, characterised in that there is provision for locking in the incoming despatch position (15) which is positively unlocked when, and only when, the rotor (13) is in a position in which the pneumatic despatch carrier is to be received.

6. Pneumatic despatch station according to Claim 4 or 5, characterised in that in the region of the opposite side there is furthermore a downwardly directed ejection position (16).

7. Pneumatic despatch station according to Claim 4 or 5, characterised in that in the region of a further side of the frame (30) inclined substantially at 90 degrees in relation to the sides, there is a horizontally extending ejection position (19) and in that a union (53) opposite this ejection position (19) is connected to a pressure line and in that in an ejection position, the duct (33) connects the union (53) to the ejection position (19).

8. Pneumatic despatch station according to Claim 7, characterised in that the pressure line is a by-pass line (18) leading to the despatch tube (14).

9. Pneumatic despatch station according to Claim 7 or 8, characterised in that in a position in which an aperture (36) in the duct (33) is situated opposite the union (40) of the despatch tube (20), the other aperture (35) is situated opposite a rigid closure plate (51).

10. Pneumatic despatch station according to one of Claims 1 to 9, characterised in that those unions (40, 41, 53) which are connected to the pressure-conducting tubes (11, 14, 18, 20) are provided with a sliding seal which is effective in relation to the surface (34) of the rotor (13).

11. Pneumatic despatch station according to Claim 10, characterised in that the unions (40) are pressed against the surface (34) by means of an elastic element (63).

12. Pneumatic despatch station according to Claim 11, characterised in that the elastic element (63) is located in an annular groove (62) in a fixed flange (61) into which an annular spring (64) of the union (40) engages.

13. Pneumatic despatch station according to one of Claims 10 to 12, characterised in that a synthetic plastics part (67) forms at least one of the surfaces (34, 65) of the rotor (13) or union (40) adjacent a connecting position of the rotor (13).

14. Pneumatic despatch station according to one of Claims 1 to 13, characterised in that the rotor (13) is a cast body, preferably cast in light metal and in that the duct (33) is formed by a tube (68) inserted into the cast body and consisting preferably of PVC.

15. Pneumatic despatch station according to one of Claims 1 to 14, characterised in that the rotor (13) is driven by a motor (28) which receives its control signals from an electronic control device (23) which is in turn connected to sensors (26) responding to passing carriers (50) and disposed in the course of the despatch tubes (11, 14, 20), and position sensors (29) disposed in the stations (12, 17, 21, 22), the control device (23) furthermore controlling a central blower (10).

16. Pneumatic despatch station according to Claim 15, characterised in that when a pneumatic despatch carrier (50) approaches a station (12, 17, 21, 22), to be ejected in the station (12, 17, 21, 22), the rotor (13), upon response of a duct sensor (26) located at a definite distance from the station (12, 17, 21, 22), is moved into an intermediate station in which the union (40) associated with the pneumatic tube (11, 14, 20) of the incoming carrier (50) is disposed opposite a closed portion of the surface (34) of the rotor (13) or a closure plate (51).

17. Pneumatic despatch station according to Claim 16, characterised in that the speed of the incoming pneumatic despatch carrier (50) is ascertained by two spaced apart duct sensors (26), the intermediate position of the rotor (13) being adjusted with greater anticipation the higher is the velocity ascertained.

**Revendications**

1. Station de transport pneumatique présentant un grand nombre de raccords pour l'arrivée et le départ de douilles d'envoi (50), comprenant un châssis (30) et un rotor (13) qui est capable de tourner dans le plan du châssis et qu'un canal (33) à allure arquée traverse pour mettre sélectivement en communication les raccords disposés dans le plan du châssis, la ligne médiane (39) du canal passant à une distance $(d_3)$ de l'axe de rotation (31) du rotor (13), les raccords étant formés, pour le raccordement de tubes de transport de forme arquée (11, 14), par des tubulures (40, 41) qui sont maintenues par le châssis (30) et dont les médiatrices (37, 38) sont disposées à angle oblique l'une par rapport à l'autre, de telle façon que, dans une position du rotor (13) assurant une communication, la ligne médiane (39) du canal (33) se convertisse constamment en médiatrices (37, 38, 42) des tubulures mutuellement en communication et en les lignes médianes des tubes de transport arqués (11, 14, 15), caractérisée en ce que le rotor (13) est réalisé sous la forme d'un cylindre circulaire et est pourvu d'un seul canal (33) de diamètre constant, en ce que les médiatrices (37, 38) des tubulures (40, 41) croisent, à une première distance $(d_1)$ de l'axe de rotation (31) du rotor (13), un axe horizontal (45) qui coupe l'axe de rotation (31) sous un angle droit, en ce qu'une autre tubulure (43) est agencée sur le châssis (30) pour le raccordement d'une position d'entrée, en ce que la médiatrice (42) de l'autre tubulure (43) croise l'axe (45) à une deuxième distance $(d_2)$ de l'axe de rotation (31), et en ce que tous les tubes de transport (11, 14, 15) s'étendent de manière arquée dans le prolongement des tubulures (40, 41, 43).

2. Station de transport pneumatique suivant la revendication 1, caractérisée en ce que le rotor (13) présente une surface (34) qui est fermée en dehors des ouvertures (35, 36) du canal (33) dans l'enveloppe cylindrique.

3. Station de transport pneumatique suivant l'une des revendications 1 et 2, caractérisée en ce qu'un tube de transport (14) et une position d'entrée (15) sont raccordés sur un côté du châssis, et un tube de transport (11) sur le côté opposé.

4. Station de transport pneumatique suivant la revendication 3, caractérisée en ce que les axes des tubes de transport (11, 14) et de la position d'entrée (15) s'étendent sensiblement suivant une direction verticale.

5. Station de transport pneumatique suivant l'une des revendications 3 ou 4, caractérisée en ce qu'il est prévu un verrouillage dans la position d'entrée (15) qui ensuite, et uniquement lorsque le rotor (13) se trouve dans une position dans laquelle la douille d'envoi peut être introduite, est obligatoirement déverrouillée.

6. Station de transport pneumatique suivant l'une des revendications 4 ou 5, caractérisée en ce qu'une position d'éjection (16) dirigée vers le bas se trouve en outre dans la zone du côté opposé.

7. Station de transport pneumatique suivant l'une des revendications 4 ou 5, caractérisée en ce qu'une position d'éjection (19) orientée suivant une direction horizontale se trouve dans la zone d'un autre côté du châssis (30) qui est incliné sensiblement de 90° par rapport aux côtés, en ce qu'une tubulure (53) située à l'opposé de cette position d'éjection (19) est raccordée à un conduit sous pression et en ce que, dans une position d'éjection, le canal (33) met en communication la tubulure (53) avec la position d'éjection (19).

8. Station de transport pneumatique suivant la revendication 7, caractérisée en ce que le conduit sous pression est un conduit de dérivation (18) conduisant au tube de transport (14).

9. Station de transport pneumatique suivant l'une des revendications 7 ou 8, caractérisée en ce que, dans une position dans laquelle une ouverture (36) du canal (33) se trouve en face de la tubulure (40) du tube de transport (20), l'autre ouverture (35) est située en face d'une plaque de fermeture fixe (51).

10. Station de transport pneumatique suivant l'une des revendications 1 à 9, caractérisée en ce que les tubulures (40, 41, 53), qui sont raccordées aux tubes de transport pneumatique (11, 14, 18, 20), sont pourvues d'un joint glissant efficace vis-à-vis de la surface (34) du rotor (13).

11. Station de transport pneumatique suivant la revendication 10, caractérisée en ce que les tubulures (40) sont comprimées contre la surface (34) au moyen d'un élément élastique (63).

12. Station de transport pneumatique suivant la revendication 11, caractérisée en ce que l'élément élastique (63) se trouve dans une rainure annulaire (62) d'une bride fixe (61) dans laquelle pénètre une languette annulaire (64) de la tubulure (40).

13. Station de transport pneumatique suivant une des revendications 10 à 12, caractérisée en ce qu'au moins une des surfaces (34, 65) du rotor (13) ou respectivement de la tubulure (40), qui sont contiguës dans une position du rotor (13) assurant une communication, est formée par une pièce de matière synthétique (67).

14. Station de transport pneumatique suivant l'une quelconque des revendications 1 à 13, caractérisée en ce que le rotor (13) est une pièce coulée, de préférence une pièce coulée à base de métal léger, et en ce que le canal (33) est formé par un conduit tubulaire (68), introduit dans la pièce coulée et de préférence à base de PCV.

15. Station de transport pneumatique suivant une des revendications 1 à 14, caractérisée en ce que le rotor (13) est entraîné par un moteur (28) qui reçoit ses signaux de commande d'un appareil de commande électronique (23), qui, de son côté, est relié à des détecteurs de conduit (26) qui sont agencés dans le parcours des tubes de transport (11, 14, 20) et qui réagissent au passage de douilles d'envoi (50) ainsi qu'à des détecteurs de position (29) qui sont agencés dans les stations (12, 17, 21, 22), l'appareil de commande (23) commandant en outre une soufflante centrale (10).

16. Station de transport pneumatique suivant la revendication 15, caractérisée en ce que, lors de l'arrivée d'une douille d'envoi (50) à une station (12, 17, 21, 22), le rotor (13) est, pour l'éjection dans la station (12, 17, 21, 22), amené, lorsqu'un détecteur de conduit (26) agencé à une distance définie de la station (12, 17, 21, 22) réagit, dans une position intermédiaire dans laquelle la tubulure (40), adjointe au tube de transport (11, 14, 20) de la douille d'envoi (50) qui arrive, est située en face d'une section fermée de la surface (34) du rotor (13) ou d'une plaque de fermeture (51).

17. Station de transport pneumatique suivant la revendication 16, caractérisée en ce que la vitesse de la douille d'envoi (50) qui arrive est déterminée par deux détecteurs de conduit (26) agencés à distance et en ce que la position intermédiaire du rotor (13) est ajustée d'autant plus précocement que la vitesse est élevée.

Fig. 1

0 130 491

Fig. 2b

Fig. 2a

Fig. 3b  Fig. 3c  Fig. 3d

Fig. 3a

Fig. 4

Fig. 5 b

Fig. 5 c

Fig. 5a

Fig. 6

Fig. 7

6